# EUROPEAN PATENT SPECIFICATION

(11) **EP 3 332 176 B1**
(45) Date of publication and mention of the grant of the patent: **02.10.2019**
(21) Application number: 16766381.4
(22) Date of filing: 04.08.2016
(51) Int. Cl.: F24F 7/02, F24F 7/00, A01K 1/00

(54) **VENTILATION GROUP**
LÜFTUNGSAGGREGAT
GROUPE DE VENTILATION

(30) Priority: 05.08.2015 IT UB20152865
(43) Date of publication of application: 13.06.2018
(73) Proprietor: Santonicola, Amedeo, 84090 Montecorvino Pugliano (SA) (IT)
(72) Inventor: Santonicola, Amedeo, 84090 Montecorvino Pugliano (SA) (IT)
(74) Representative: Dall'Olio, Christian
(86) International application number: PCT/IB2016/054713
(87) International publication number: WO 2017/021924

(56) References cited:
- DE-A1- 3 131 655
- DE-A1- 10 046 702
- FR-A1- 2 904 018
- GB-A- 2 386 944
- JP-A- S57 164 244
- US-A- 6 077 159

## Description

### FIELD OF THE INVENTION

The present invention relates to the technical sector of livestock plants (for example barns) or industrial plants (for example factories).

### DESCRIPTION OF THE PRIOR ART

A need is strongly perceived to increase the ventilation internally of this type of plant, especially in the summer months since, in fact, the high temperatures reached in the hottest months endanger the well-being of the animals and/or operators internally thereof.

A livestock plant of known type comprises a roof, for example a pitched roof, which includes an open central longitudinal opening above which an upper cupola is arranged.

The air therefore flows through the central opening from inside the plant towards the outside.

This type of plant is, generally open at the relative lateral walls, and comprises a support structure for the roof.

However, this system is not sufficient to guarantee good ventilation internally of plants. In particular, the temperature inside these plants reaches higher levels with respect to the external environment and, in particular during the summer months, creates situations of significant difficulty. Clearly this impacts on the animals and/or operators who might be present in the plant.

In some cases ventilators and/or conditioners are used, but their use naturally has an effect on the costs connected to the functioning thereof.

Further, the presence of the covering cupola poses a resistance to wind and creates situations of instability.

Document DE 100 46 702 A1 discloses a ventilation group for a livestock or industrial plant in according to preamble of claim 1.

### SUMMARY OF THE INVENTION

The aim of the present invention is to obviate the above-mentioned drawbacks.

The aim is attained with a ventilation group according to claim 1.

The group of the present invention advantageously enables significantly increasing the ventilation internally of a livestock or industrial plant. This result has been reached without the use of ventilators and/or conditioners that in the prior art led to high costs.

Further, the drawbacks due to the presence of wind, which in the prior art created problems of instability, are eliminated.

### BRIEF DESCRIPTION OF THE DRAWINGS

Specific embodiments of the invention will be detailed in the present invention, with particular reference to the tables of drawings, in which:
- figure 1 is a perspective view of a ventilation group according to a first embodiment of the invention, in use;
- figure 2 is a lateral view of the ventilation group of figure 1;
- figures 3A and 3B illustrate two cross-sections of a ventilation group according to the first embodiment of the invention, in different variants;
- figure 4 is a perspective view of a ventilation group according to a second embodiment of the invention;
- figures 4A and 4B illustrate two cross-sections of a ventilation group according to the second embodiment of the invention, in different variants;
- figure 5 is a perspective view of a ventilation group according to the second embodiment of the invention, in use.

### DESCRIPTION OF THE PREFERRED EMBODIMENTS

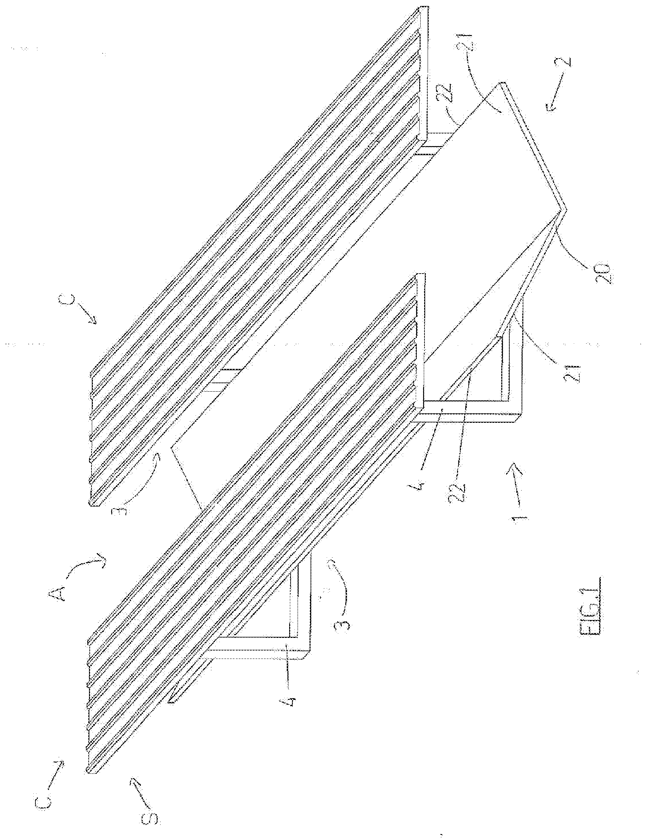

With reference to the accompanying figures of the drawings, the invention relates to a ventilation group (1) for a livestock or industrial plant (for example a barn or a factory not illustrated). The plant has a roof (C) provided with at least an upper opening (A) communicating with an external environment (see in particular figure 1, in which a roof (C) is partly illustrated). The plant further comprises at least a lateral opening (not illustrated), provided in at least a lateral wall of the plant and communicating with the external environment. This type of plant is, in fact, generally open at the relative lateral walls.

In particular, the group (1) comprises at least a collecting and conveying channel (2), comprising a bottom (20) and lateral walls (21).

The group (1) further comprises fixing means, for fixing the channel (2) to the roof (C), so that the channel (2) is arranged below the upper opening (A). The channel (2) is conformed and predisposed for collecting atmospheric precipitation which arrives therein from the external environment through the upper opening (A), and for conveying it towards a ground surface.

The group (1) further comprises at least a passage (3) for the air, predisposed to place in communication an inside of the plant with the upper opening (A) of the roof (C), so as to generate an air flow which enters the plant through the lateral opening and which reaches towards the external environment through the passage (3) and the upper opening (A).

The group (1) of the invention advantageously increases the "flue effect" (sometimes termed "passive cooling"), i.e. the natural ventilation phenomenon which draws hot air from inside the plant, which is clearly borne upwards, to exit to the outside by crossing the passage (3) and therefore the upper opening (A) of the roof (C), while air at a lower temperature enters the plant from the lateral opening. This is due to the fact that when the air with higher temperature exits from the plant through the upper opening (A), a sort of depression is created which determines the aspirating of air at a lower temperature into the plant through the lateral opening thereof. This vertical displacement of masses produces a contemporaneous horizontal movement of the air from the external zone with a higher density (cooler) towards the internal zone at a lower temperature and therefore the entry, through the lateral opening, of cooler air internally of the plant.

This air flow advantageously significantly improves the conditions internally of the plant, and therefore positively influences the well-being of the animals and/or the operators present internally of the plant.

Consequently, an air flow is created that is able to significantly reduce the temperature internally of the plant with respect to the known systems.

Differently to the prior-art solutions, in which the presence of wind creates problems of instability, with the invention the presence of wind increases the "natural ventilation" phenomenon.

Clearly the upper opening (A) of the roof (C) can be predisposed during the design step of the plant or can be realised following this.

For example, as regards the latter case, the group (1) can advantageously be exploited for example for reactivating industrial factories that are at present not being used.

Clearly a greater advantage is obtained with a plurality of upper openings (A) and a plurality of ventilation groups (1). In this way it is in fact possible to include openings that involve up to about 50% of the surface of the plant. In the prior art, this was not possible as only the central opening in the roof was present.

Note that the channel (2) can have a variable length according to needs. For example, a plurality of channels (2) can be predisposed, one following another, fixed longitudinally or transversally to one another with respect to the roof (C).

The channel (2) has a width (i.e. a transversal extension) that is at least equal to a width of the overlying upper opening (A) (preferably greater than the width of the upper opening (A)).

The channel (2) is preferably fixable to the roof (C) so as to be inclined towards the ground surface, to facilitate conveying of the atmospheric precipitation. The group (1) of the invention can be predisposed in a plant having a roof (C) of any type, i.e. pitched (single or multiple), flat or curved. Clearly, in accordance with the type of roof (C), the group (1) is consequently arranged in such a way that the channel (2) can convey the atmospheric precipitation towards the ground surface (see figure 1).

The group (1) of the invention advantageously does not constitute an overload with respect to the known systems, and offers no resistance to wind.

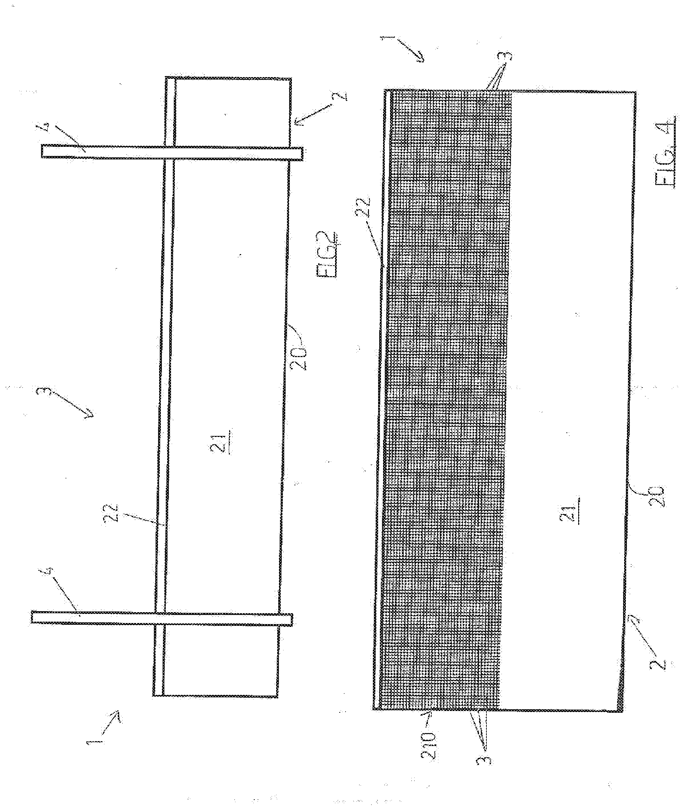

In a first embodiment of the invention, illustrated in figures, 1, 2, 3A, 3B, the fixing means comprise a frame (4), fixed to the channel (2) and fixable to the roof (C), so that the passage (3) is defined between at least a lateral wall (21) of the channel (2) and the roof (C) (see figures 1 and 2).

In other words, the passage (3) is defined between the upper edge (22) of at least a lateral wall (21) of the channel (2) and the roof (C). Two passages (3) are preferably defined, each between the upper edge (22) of at least a lateral wall (21) of the channel (2) and the roof (C).

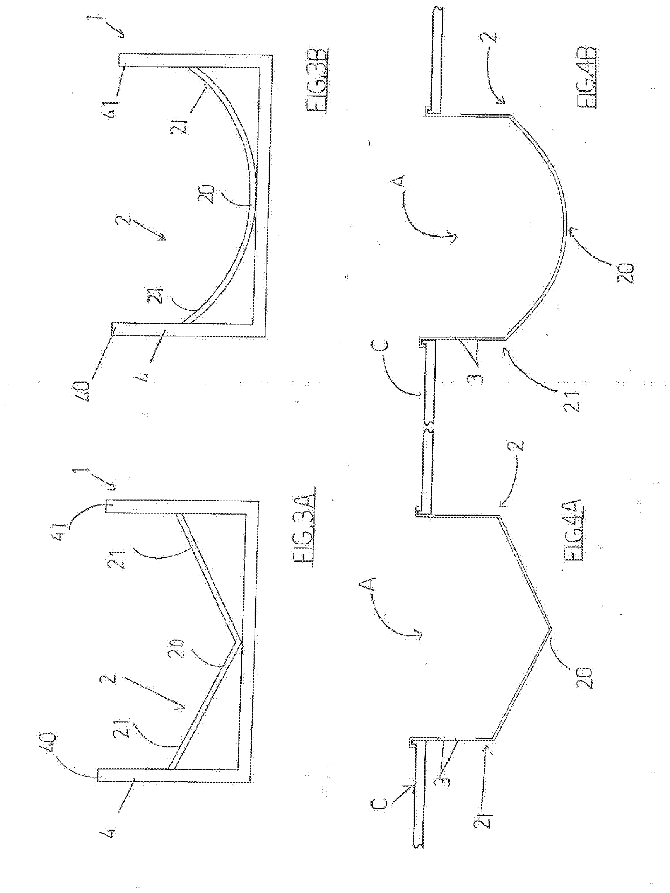

For example, the frame (4) comprises at least a support element having a C-shaped section, opposite ends of which are fixable to the roof (C). The channel (2) is fixed for example internally of the recess of the C (see figures 1, 3A-3B).

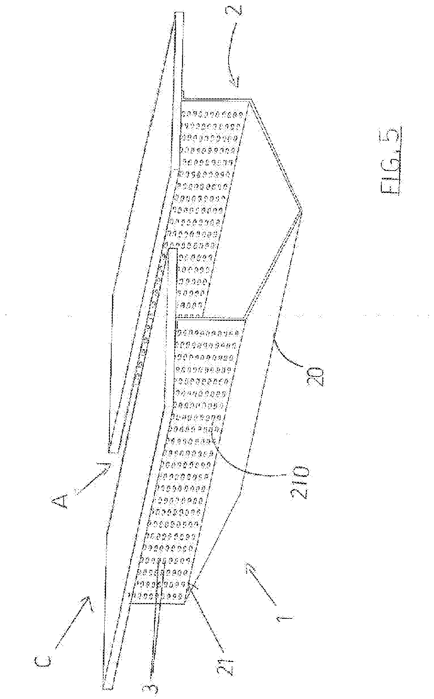

In accordance with a different embodiment of the invention, illustrated in figures 4, 4A, 4B, 5, the channel (2) can be defined as "self-supporting", as the group (1) lacks the frame described in the preceding embodiment.

In this variant, the lateral walls (21) of the channel (2) comprise at least an upper edge (22) (preferably two upper edges) fixable to the roof (C) (see in particular figures 5, 4A, 4B). In this case, the passage (3) is arranged at least at a lateral wall (21) of the channel (2).

More than one passage (3) can advantageously be included.

For example, the edges of the lateral walls (21) can be projecting so as to be positionable resting on the roof (C) and fixed thereto by the fixing means (comprising for example holes, screws and/or fixing pins, not illustrated).

Alternatively, the upper edges (22) of the lateral walls (21) can be fixed below the roof (C), also by means of the fixing means.

The channel (2) can have different sections according to needs, as illustrated in figures 3A, 3B, 4A, 4B. It is clear that it is possible to include any other section useful for achieving the aim of the invention.

For example, at least a lateral wall of the channel (2) comprises a grid (210) (and/or a net), the meshes of which define a plurality of passages (3) for the air (see figure 4).

Clearly both the lateral walls (21) can each comprise a grid (210) (and/or a net).

In this way, entry into the plant of insects or other undesired foreign bodies is prevented, without blocking the passage of air. Further, the presence of the grid (210) (and/or the net) also precludes the formation of air vortices internally of the plant. Alternatively tilting or sliding windows can be provided for the partial closure of the passage (3), according to need (situation not illustrated).

The group (1) can further comprise a grid and/or a net, positionable at the upper opening (A) of the roof (C). The grid (and/or net) not only prevents entry of insects and/or foreign bodies into the plant, it also receives snow thereon, preventing an overloading of the channel (2) (situation not illustrated). In this way, the structure of the group (1) is consequently lightened.

The invention further relates to a system (S) comprising a roof (C) provided with a plurality of upper openings (A) and a plurality of ventilation groups (1) as described in the foregoing (see figure 1 or figure 5, in which the system (S) is only partially illustrated). The system (S) can be thus realised during the design step thereof or can be obtained starting from a roof (C) of known type, in which the upper openings (A) can be predisposed. The system (S) is therefore versatile and adaptable according to needs.

For example the roof (C) is of a pitched (see figure 1), or flat, or curved type.

Further, the group (1) can be predisposed in a commercial plant.

## Claims

1. A ventilation group (1) for a livestock or industrial plant,
the plant having a roof (C) provided with at least an upper opening (A) communicating with an external environment; and at least a lateral opening, provided in at least a lateral wall of the plant and communicating with the external environment;
the group comprising:
at least a collecting and conveying channel (2), comprising a bottom (20) and lateral walls (21);
fixing means, for fixing the channel (2) to the roof (C), so that the channel (2) is arranged below the upper opening (A);
the channel (2) being conformed and predisposed for collecting atmospheric precipitation which arrives from the external environment through the upper opening (A), and for conveying the atmospheric precipitation towards a ground surface;
at least a passage (3) for the air, predisposed to place in communication an inside of the plant with the upper opening (A) of the roof (C), so as to generate an air flow which enters the plant through the lateral opening and which reaches towards the external environment through the passage (3) and the upper opening (A);
the channel (2) being fixable to the roof (C) so as to be inclined towards the ground surface, to facilitate conveying of the atmospheric precipitation;
the channel (2) having a width that is at least equal to a width of the upper opening (A), preferably greater than the width of the upper opening (A);
the ventilation group being **characterised in that** it comprises, alternatively or in combination:
a grid (210) or a net, provided in at least a lateral wall (21) of the channel (2), for preventing entry into the plant of insects and/or foreign bodies without precluding passage of the air; and/or
a grid or a net, positionable at the upper opening (A) of the roof (C), for preventing entry into the plant of insects and/or foreign bodies and for receiving thereon snow precipitation which otherwise would overload the channel (2).

2. The group (1) of claim 1, wherein the upper opening (A) of the roof (C) and the channel (2) are arranged transversally or longitudinally with respect to the longitudinal extension of the plant.

3. The group (1) of claim 1 or 2, wherein the lateral walls (21) of the channel (2) comprise at least an upper edge (22) fixable to the roof (C); wherein the passage (3) is arranged at least at a lateral wall (21) of the channel (2).

4. The group (1) of claim 1 or 2, wherein the fixing means comprise a frame (4), fixed to the channel (2) and fixable to the roof (C), so that the passage (3) is defined between at least a lateral wall (21) of the channel (2) and the roof (C).

5. The group (1) of the preceding claim, wherein the frame (4) comprises at least a support element having a C-shaped section, opposite ends of which (40, 41) are fixable to the roof (C).

6. A system (S) comprising a roof (C) provided with a plurality of upper openings (A) and a plurality of ventilation groups (1) according to one of the preceding claims, the upper openings (A) being arranged transversally or longitudinally with respect to the longitudinal extension of the plant.

7. The system (S) of the preceding claim, wherein the roof (C) is of a pitched, or flat, or curved type.

## Patentansprüche

1. Lüftungsaggregat (1) für eine Tierhaltungs- oder Industrieanlage,
wobei die Anlage ein Dach (C) aufweist, das mit zumindest einer oberen Öffnung (A) ausgestattet ist, die in Verbindung mit einer Außenumgebung steht; und zumindest eine seitliche Öffnung, die in zumindest einer Seitenwand der Anlage vorgesehen ist und mit der Außenumgebung in Verbindung steht;
das Aggregat Folgendes umfassend:
zumindest einen Sammel- und Förderkanal (2), der einen Boden (20) und Seitenwände (21) aufweist;
Befestigungsmittel, zum Befestigen des Kanals (2) an dem Dach (C), so dass der Kanal (2) unterhalb der oberen Öffnung (A) angeordnet ist;
wobei der Kanal (2) dafür ausgelegt und vorgesehen ist, den atmosphärischen Niederschlag, der von der Außenumgebung durch die obere Öffnung (A) eintritt, zu sammeln und den atmosphärischen Niederschlag zu einer Bodenoberfläche zu befördern;
zumindest einen Durchgang (3) für die Luft, der dafür ausgelegt ist, eine Innenseite der Anlage mit der oberen Öffnung (A) des Dachs (C) in Verbindung zu setzen, um eine Luftströmung zu erzeugen, die durch die seitliche Öffnung in die Anlage eintritt und die durch den Durchgang (3) und die obere Öffnung (A) die Außenumgebung erreicht;
wobei der Kanal (2) so an dem Dach (C) befestigt werden kann, dass er zu Bodenoberfläche hin geneigt ist, um die Beförderung des atmosphärischen Niederschlags zu erleichtern;
wobei der Kanal (2) eine Breite aufweist, die zumindest gleich der Breite der oberen Öffnung (A) ist, vorzugsweise größer als die Breite der oberen Öffnung (A);
wobei das Lüftungsaggregat **dadurch gekennzeichnet ist, dass** es, alternativ oder in Kombination, umfasst:
ein Gitter (210) oder ein Netz, die in zumindest einer Seitenwand (21) des Kanals (2) vorgesehen sind, um das Eindringen von Insekten und/oder Fremdkörpern in die Anlage zu verhindern, ohne den Luftdurchgang zu verhindern; und/oder
ein Gitter oder ein Netz, die an der oberen Öffnung (A) des Dachs (C) angeordnet werden können, um das Eindringen von Insekten und/oder Fremdkörpern in die Anlage zu verhindern und um darauf schneeförmigen Niederschlag aufzunehmen, der andernfalls den Kanal (2) überlasten würde.

2. Aggregat (1) nach Anspruch 1, wobei die obere Öffnung (A) des Dachs (C) und der Kanal (2) quergerichtet oder längsgerichtet zu der Längsausdehnungsrichtung der Anlage angeordnet sind.

3. Aggregat (1) nach Anspruch 1 oder 2, wobei die Seitenwände (21) des Kanals (2) zumindest einen oberen Rand (22) umfassen, der an dem Dach (C) befestigt werden kann; wobei der Durchgang (3) an zumindest einer Seitenwand (21) des Kanals (2) angeordnet ist.

4. Aggregat (1) nach Anspruch 1 oder 2, wobei die Befestigungsmittel einen Rahmen (4) umfassen, der am dem Kanal (2) befestigt ist und an dem Dach (C) befestigt werden kann, so dass der Durchgang (3) zwischen zumindest einer Seitenwand (21) des Kanals (2) und dem Dach (C) gebildet wird.

5. Aggregat (1) nach dem vorhergehenden Anspruch, wobei der Rahmen (4) zumindest ein Trägerelement mit C-förmigem Querschnitt umfasst, dessen einander gegenüberliegende Enden (40, 41) an dem Dach (C) befestigt werden können.

6. System (S), umfassend ein Dach (C), das eine Vielzahl von oberen Öffnungen (A) und eine Vielzahl von Lüftungsaggregaten (1) nach einem der vorhergehenden Ansprüche aufweist, wobei die oberen Öffnungen (A) quergerichtet oder längsgerichtet zu der Längsausdehnungsrichtung der Anlage angeordnet sind.

7. System (S) nach dem vorhergehenden Anspruch, wobei das Dach (C) vom Typ eines Giebeldachs oder Flachdachs oder Tonnendachs ist.

## Revendications

1. Un groupe de ventilation (1) pour un établissement d'élevage ou industriel, l'établissement ayant une toiture (C) pourvue d'au moins une ouverture supérieure (A) communiquant avec un environnement extérieur ; et au moins une ouverture latérale, prévue dans au moins une paroi latérale de l'établissement et communiquant avec l'environnement extérieur;
le groupe comprenant:
au moins un canal (2) de collecte et d'acheminement, comprenant un fond (20) et deux parois latérales (21);
des moyens de fixation, pour fixer le canal (2) à la toiture (C), de manière à ce que le canal (2) soit disposé sous l'ouverture supérieure (A);
le canal (2) étant conformé et prédisposé pour collecter les précipitations atmosphériques qui arrivent de l'environnement extérieur à travers l'ouverture supérieure (A), et pour acheminer les précipitations atmosphériques vers une surface au sol ;
au moins un passage (3) pour l'air, prédisposé pour mettre en communication l'intérieur de l'établissement avec l'ouverture supérieure (A) de la toiture (C), de manière à générer un flux d'air qui entre dans l'établissement à travers l'ouverture latérale et qui se dirige vers l'environnement extérieur à travers le passage (3) et l'ouverture supérieure (A) ;
le canal (2) pouvant être fixé à la toiture (C) de manière à être incliné vers la surface au sol, pour faciliter l'acheminement des précipitations atmosphériques ;
le canal (2) ayant une largeur qui est au moins égale à une largeur de l'ouverture supérieure (A), de préférence supérieure à la largeur de l'ouverture supérieure (A) ;
le groupe de ventilation étant **caractérisé en ce qu'**il comprend, alternativement ou en combinaison :
une grille (210) ou un filet, prévu(e) dans au moins une paroi latérale (21) du canal (2), pour empêcher l'entrée dans l'établissement d'insectes et/ou de corps étrangers sans empêcher le passage de l'air ; et/ou
une grille ou un filet, pouvant être positionné(e) au niveau de l'ouverture supérieure (A) de la toiture (C), pour empêcher l'entrée dans l'établissement d'insectes et/ou de corps étrangers et pour y recevoir les précipitations de neige qui surchargeraient sinon le canal (2).

2. Le groupe (1) selon la revendication 1, dans lequel l'ouverture supérieure (A) de la toiture (C) et le canal (2) sont disposés transversalement ou longitudinalement par rapport à l'extension longitudinale de l'établissement.

3. Le groupe (1) selon la revendication 1 ou 2, dans lequel les parois latérales (21) du canal (2) comprennent au moins un bord supérieur (22) pouvant être fixé à la toiture (C) ; dans lequel le passage (3) est disposé au moins au niveau d'une paroi latérale (21) du canal (2).

4. Le groupe (1) selon la revendication 1 ou 2, dans lequel les moyens de fixation comprennent un châssis (4), fixé au canal (2) et pouvant être fixé à la toiture (C), de manière à ce que le passage (3) soit défini entre au moins une paroi latérale (21) du canal (2) et la toiture (C).

5. Le groupe (1) selon la revendication précédente, dans lequel le châssis (4) comprend au moins un élément de support ayant une section en « C », dont les extrémités opposées (40, 41) peuvent être fixées à la toiture (C).

6. Un système (S) comprenant une toiture (C) pourvue d'une pluralité d'ouvertures supérieures (A) et d'une pluralité de groupes de ventilation (1) selon l'une des revendications précédentes, les ouvertures supérieures (A) étant disposées transversalement ou longitudinalement par rapport à l'extension longitudinale de l'établissement.

7. Le système (S) selon la revendication précédente, dans lequel la toiture (C) est d'un type en pente, ou plat, ou incurvé.
